**Europäisches Patentamt**

**European Patent Office**

**Office européen des brevets**

(19)

(11) Veröffentlichungsnummer: **0 234 263 B1**

## (12) EUROPÄISCHE PATENTSCHRIFT

(45) Veröffentlichungstag der Patentschrift:
16.01.91 Patentblatt 91/03

(51) Int. Cl.⁵ : **H04N 17/00**

(21) Anmeldenummer: **87100748.0**

(22) Anmeldetag: **20.01.87**

(54) **Verfahren zur digitalen Übertragung von Prüfsignalen in Prüfzeilen eines Videosignals.**

(30) Priorität: **23.01.86 DE 3601992**

(43) Veröffentlichungstag der Anmeldung:
**02.09.87 Patentblatt 87/36**

(45) Bekanntmachung des Hinweises auf die
Patenterteilung:
**16.01.91 Patentblatt 91/03**

(84) Benannte Vertragsstaaten:
**AT CH DE FR GB IT LI**

(56) Entgegenhaltungen:
**US-A- 4 276 564**
**NHK LABORATORIES NOTE, Nr. 216,
September 1977, Seiten 1-13, NHK, Tokyo, JP;
Y. NUMAGUCHI et al.: "Compatibility and
transmission characteristics of digital signals
inserted in the field-blanking interval of a
television signal"**

(56) Entgegenhaltungen:
**INTERNATIONALE ELEKTRONISCHE
RUNDSCHAU, Band 27, Nr. 1, Januar 1973,
Seiten 2-7, Berlin, DE; H. WENDT:
"Interframe-Codierung für Videosignale"
SMPTE JOURNAL, Band 91, Nr. 3, März 1982,
Seiten 245-252, Scarsdale, New York, US; R.C.
BRAINARD et al.: "Predictive coding of
composite NTSC color television signals"
NTC '76 NATIONAL TELECOMMUNICATIONS
CONFERENCE, Dallas, 20. November - 1.
Dezember 1976, Band 1, Seiten 6.4.1-6.4.5,
IEEE, New York, US; T. ISHIGURO:
"Composite interframe coding of NTSC color
television signals"**

(73) Patentinhaber: **Siemens Aktiengesellschaft
Wittelsbacherplatz 2
D-8000 München 2 (DE)**

(72) Erfinder: **Grallert, Hans-Joachim, Dr. Ing.
Tannenfleckstrasse 30
D-8038 Gröbenzell (DE)**

## Beschreibung

Die Erfindung betrifft ein Verfahren nach dem Oberbegriff des Patentanspruchs 1.

Bei der digitalen Übertragung von Videosignalen werden zur Datenreduktion zunehmend DPCM-Verfahren (Differenz-Pulscode-Modulation) verwendet.

Innerhalb eines Videosignals sind im allgemeinen vier Prüfzeilen innerhalb der Vertikalaustastlücke für Prüfsignale reserviert. In diesen Prüfzeilen werden von den Fernsehanstalten und von der Post Prüfsignale übertragen, die eine Beurteilung der Qualität des analogen Übertragungskanals gestatten. Nähere Einzelheiten hierzu sind der CCIR-Rec. 473-3, Genf, 1982 zu entnehmen. Auch bei einer abwechselnden, analogen, digitalen Übertragung von Videosignalen sollen die Prüfsignale am Ende der Übertragungsstrecke zur Beurteilung der analogen Übertragungskanäle zur verfügung stehen und deshalb möglichst nicht durch die digitale Umsetzung verzerrt werden.

Um eine optimale Bildqualität bei hoher Datenreduktion zu erhalten, wird das eigentliche Bildsignal in Komponenten zerlegt übertragen. Am häufigsten ist hierbei die Aufteilung in ein Luminanzsignal und zwei Farbdifferenzsignale. Die Abtastraten und Prädiktionsalgorithmen werden hierbei den Erfordernissen der einzelnen Komponenten angepaßt.

Aus dem SMPTE-Journal, Vol. 91 (1982), No. 3, S. 245-252 ist es bekannt, NTSC-Farbsignale geschlossen abzutasten und DPCMcodiert zu übertragen. Hierbei werden auch die Prüfzeilen mitübertragen. Die Codierung des gesamten videosignals erfolgt mittels einer zweidimensionalen Intrafield-Prädiktion. Es wurde festgestellt, daß ein anderer Prädiktionsalgoritmus innerhalb der zweidimensionalen Intrafield-Prädiktion für die Übertragung der Prüfzeilen zu günstigeren Ergebnissen führt und der vierte vorausgegangene Abtastwert derselben Zeile vorgeschlagen.

In der Einleitung von NTC 76, November 29, 30 und 1. Dezember 1976, Dallas, Texas wird auf zwei NETEC-Video-Übertragungssysteme hingewiesen, die mit einer geschlossenen InterframeCodierung arbeiten, wobei die Prüfzeilen mit der gleichen Interframe-Codierung verarbeitet werden.

Um eine optimale Übertragungsqualität sicherzustellen, wird jedoch - wie bereits erwähnt - ein in Komponenten zerlegtes Videosignal übertragen. Der Kompromiß, mit dem gleichen Prädiktionsverfahren sowohl das Bildsignal auch als das Prüfsignal zu übertragen, verhindert eine optimale Datenreduktion und Bildqualität.

Es ist die Aufgabe der Erfindung ein Verfahren zur digitalen Übertragung der Prüfsignale mit großer Datenreduktion bei der Übertragung eines in Komponenten zerlegten Videosignals anzugeben.

Die Erfindung wird durch die im Patentanspruch 1 angegebenen Merkmale gelöst. Vorteilhafte Ausbildungen der Erfindung sind in den Unteransprüchen angegeben.

Die erfindungsgemäße Verwendung der dem aktuellen Abtastwert entsprechenden Abtastwerte von Prüfzeilen vorangegangener Fernsehbilder zur Ermittlung des Schätzwertes erbringt den Vorteil, daß der Schaltungsaufwand für die in Zeitrichtung erfolgende Codierung (die verwendung von Teilbildern wird als zweidimensionale Codierung bezeichnet und hier nicht als Abhängigkeit von der Zeit verstanden) gering ist. Denn wenn nur ein entsprechender Abtastwert der entsprechenden Prüfzeile (bzw. Prüfzeilen) des letzten Fernsehbildes verwendet wird, so braucht nur jeweils eine Prüfzeile beim Coder und Decoder zwischengespeichert werden. Durch verwendung mehrerer vorangegangener Prüfzeilen wird dabei ein integrierender Effekt bewirkt. Diese gewissermaßen nur in der dritten Dimension erfolgende (eindimensionale) DPCM-Codierung bewirkt, daß im "eingeschwungenen Zustand" alle übertragenen DPCM-Signalwerte O sind, weil in aufeinanderfolgenden Fernsehbildern die gleichen Prüfzeilen übertragen werden. Nur bei Störungen und zu Übertragungsbeginn werden andere DPCM-Signalwerte übertragen. In verbindung mit der Optimalcodierung führt dies zu einer beträchtlichen Datenreduktion.

Da das Prüfsignal große Amplitudenunterschiede und schnell ansteigende Signalflanken enthält, muß die Abtastrate entsprechend hoch sein. Je nach verwendeten Übertragungsverfahren ist ggfs. bereits die Abtastrate für das Luminanzsignal ausreichend. Im Regelfall kann jedoch mindestens mit einer Datenrate übertragen werden, die sonst zur Übertragung der Luminanz- und der Chrominanzsignale vorgesehen ist oder - aufgrund der besonderen vorteile bei der Anwendung des DPCM-Verfahrens auf die Decodierung der Prüfsignale -die Abtastrate kann sogar noch weiter erhöht werden. Die bei der üblichen DPCM-Codierung der Bildsignale benutzten Schaltungen können selbstverständlich, soweit möglich, auch für die Übertragung der Prüfsignale mit verwendet werden.

Das Verfahren wird anhand von Figuren näher erläutert.

Es zeigen

Fig. 1 ein Prinzipschaltbild eines Coders zur Durchführung des Verfahrens,

Fig. 2 zur Codierung der Prüfsignale verwendete Abtastwerte,

Fig. 3 weitere zur Codierung des Prüfsignals verwendete Abtastwerte und

Fig. 4 einen DPCM-Coder für Prüfsignale.

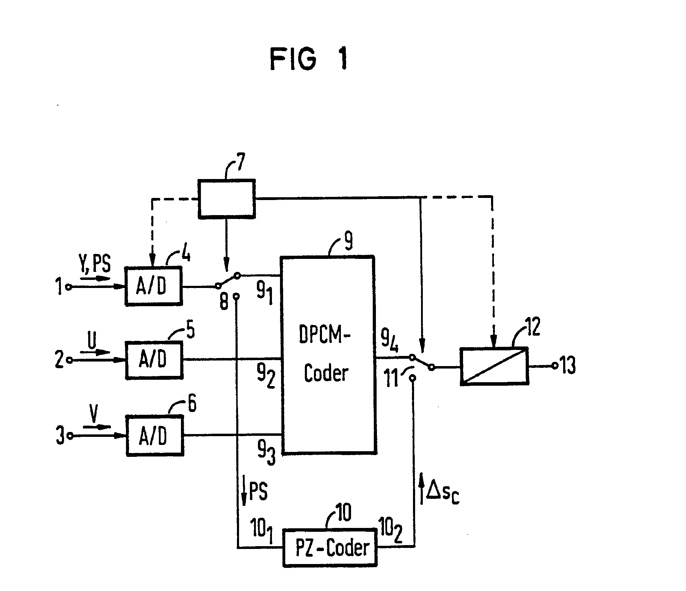

Der in Fig. 1 dargestellte Coder enthält drei Analog-Digital-Umsetzer 4,5,6, deren Eingängen 1,2 und 3 das Luminanzsignal Y und die Chrominanzsignale U und V zugeführt werden. Die Ausgänge der Analog-Digital-Umsetzer sind mit den Eingängen $9_1$, $9_2$ und $9_3$

eines DPCM-Coders 9 verbunden, dessen Ausgang $9_4$ mit einem Datensicherungs-Coder 12 verbunden ist. Zwischen dem Ausgang des ersten Analog-Digital-Umsetzers 4 und dem ersten Eingang $9_1$ des DPCM-Coders ist ein erster Umschalter 8 eingefügt, der den Ausgang des ersten Analog-Digital-Umsetzers 4 wahlweise mit dem ersten Eingang $9_1$ des DPCM-Coders oder mit dem Eingang $10_1$ eines Prüfzeilen-Coders (PZ-Coders) 10 verbindet. Dem Eingang des Datensicherungs-Coders 12 ist ein zweiter Umschalter 11 vorgeschaltet, über den wahlweise der Ausgang $9_4$ des DPCM-Coders 9 oder der Ausgang $10_2$ des Prüfzeilen-Coders angeschaltet werden kann. Eine Steuerung 7 betätigt die beiden Umschalter, wenn eine Prüfzeile codiert werden soll. Gegebenenfalls schaltet die Steuerung 7 auch noch die Abtastrate des ersten Analog-Digital-Umsetzers 4 um und ändert auch die Codierungsvorschrift des Datensicherungs-Coders 12.

Während einer Prüfzeile wird dem Eingang 1 statt des üblichen Luminanzsignals Y das Prüfsignal PS zugeführt, abgetastet und digitalisiert. Im Prüfzeilen-Coder 10 wird eine besonders für das Prüfsignal geeignete DPCM-Codierung durchgeführt. Die erhaltenen DPCM-Signalwerte $\Delta$ s werden quantisiert und mit Hilfe eines Optimalcodes ausgegeben. Die codierten Prüfsignale $\Delta s_c$ (DPCM-Signalwerte) werden dem Datensicherungs-Coder 12 zugeführt und mit Hilfe eines fehlererkennenden oder eines fehlerkorrigierenden Codes gesichert. Der Datensicherungs-Coder kann auch bereits im Prüfzeilen-Coder 10 oder im DPCM-Coder 9 enthalten sein. Da der DPCM-Coder während des Übertragens von Prüfzeilen nicht zur Codierung des Videosignals benötigt wird, kann er - entsprechend umgeschaltet - auch als Prüfzeilen-Coder eingesetzt werden.

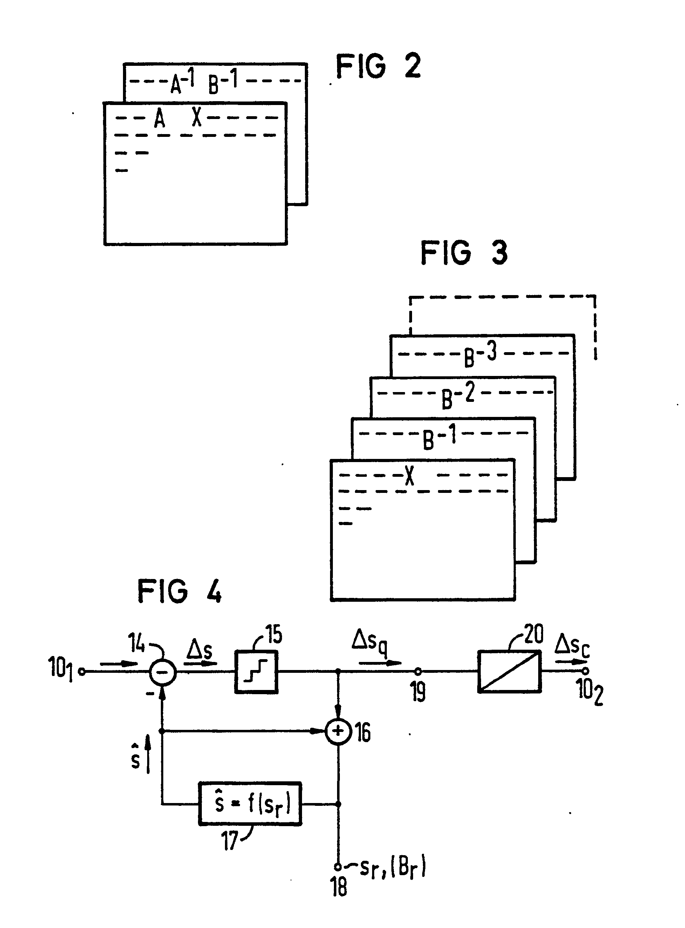

In Fig. 2 sind zwei aufeinanderfolgende Fernsehbilder dargestellt und in diesen jeweils zwei Abtastwerte bezeichnet. Es soll gerade ein DPCM-Signalwert aus dem vorliegenden Abtastwert X ermittelt werden. Hierzu wird, der entsprechende Abtastwerte $B^{-1}$ des letzten Fernsehbildes als Schätzwert $\hat{s}$ verwendet. Hieraus wird der DPCM-Signalwert

$$\Delta s = s - \hat{s} \quad (1)$$

ermittelt.

Ebenso können bei der Codierung der Prüfzeilen jedoch auch mehrere dem aktuellen Abtastwert entsprechende Abtastwerte $B^{-1}$, $B^{-2}$, $B^{-3}$, ... der bereits übertragenen Fernsehbilder (Fig. 3) zur Ermittlung des Schätzwertes verwendet werden. Der aktuelle Schätzwert kann bei der Berücksichtigung von drei vorangegangenen Fernsehbildern beispielsweise ermittelt werden nach :

$$\hat{s} = \frac{1}{2} B^{-1} + \frac{1}{4} B^{-2} + \frac{1}{4} B^{-3} \quad (2)$$

oder bei vier vorangegangenen Fernsehbildern :

$$\hat{s} = \frac{1}{2} B^{-1} + \frac{1}{4} B^{-2} + \frac{1}{8} B^{-3} + \frac{1}{8} B^{-4} \quad (3)$$

Es werden natürlich jeweils nur gleiche Prüfzeilen (z.B. Zeile 17 oder Zeile 330) eines Fernsehbildes zur Berechnung des Schätzwertes verwendet.

Die Codierung der Prüfsignale erfolgt in einem üblichen DPCM-Coder, der in Fig. 4 dargestellt ist. Dem Eingang $10_1$ werden die Abtastwerte s des Prüfsignals PS zugeführt. Der Eingang $10_1$ ist mit dem Eingang eines Subtrahierers 14 verbunden, dessen Ausgang an den Eingang eines Quantisierers 15 angeschlossen ist. Oer Quantisiererausgang 19 ist an den Eingang eines Codierers 20 und an einen ersten Eingang eines Addierers 16 angeschaltet. Der Addiererausgang bildet den sogenannten "lokalen" Ausgang des Coders, an dem rekonstruierte Signalwerte $s_r$ abgegeben werden, die auch einem Prädiktor 17 zugeführt werden, dessen Ausgang mit dem zweiten Eingang des Addierers 16 und mit dem Subtraktionseingang des Subtrahierers 14 verbunden ist.

Von einem am Eingang $10_1$ anliegenden Abtastwert s einer Prüfzeile wird zunächst der Schätzwert $\hat{s}$ subtrahiert. Der so erhaltene DPCM-Signalwert $\Delta s$ wird den Quantisierer 15 zugeführt, der an seinem Ausgang nur wenige quantisierte DPCM-Signalwerte $\Delta s_q$ abgibt. Diese werden über den Addierer dem Prädiktor 17 zugeführt, der hieraus den nächsten Schätzwert $\hat{s}$ berechnet. Wird als Schätzwert der entsprechende Abtastwert des vorangegangenen Fernsehbildes verwendet, so besteht der Prädiktor lediglich aus einem Laufzeitglied mit der Dauer eines Fernsehbildes. Im allgemeinen enthält der Prädiktor noch Einrichtungen zur Multiplikation, um beispielsweise Schätzwerte entsprechend der Formel (2) und (3) ermitteln zu können. Um einen Gleichlauf zwischen Coder und Decoder zu gewährleisten, werden in bekannter Weise statt der in den Formeln (2) und (3) angegebenen Abtastwerte die am Ausgang 18 anliegenden entsprechenden rekonstruierten Abtastwerte $s_r = B_r^{-1}$, $B_r^{-2}$, ... zur Prädiktion verwendet. Der PrüfzeilenCoder ist nur während des Prüfsignals aktiv.

Die quantisierten DPCM-Signalwerte $\Delta s_q$ werden im Codierer 20 beispielsweise in Codewörter gleicher, möglichst geringer Länge umgesetzt oder einer Optimalcodierung unterzogen. Der Codierer 20 kann auch bereits Aufgaben des Datensicherungs-Coders 12 übernehmen, also beispielsweise ein Paritätsbit zu jedem codierten DPCM-Signalwert hinzufügen oder einen komplizierteren Schaltungsteil zur Erzeugung eines fehlerkorrigierenden Codes enthalten.

Die so codierten Prüfsignale werden übertragen und auf der Empfangsseite in einen entsprechenden Decodierer wieder rekonstruiert und - falls erforderlich - in analoge Prüfsignale rückumgesetzt. Empfangsseitig kann nicht nur das Prüfsignal und damit die Übertragungssqualität eines analogen videokanals bewertet werden, sondern es kann auch eine zusätzliche Aussage über eine der analogen Strecke nachgeschalteten digitalen Übertragungsstrecke getroffen werden, wenn Bit- oder Zeichenfehlerrate ermittelt wird.

## Ansprüche

1. verfahren zur digitalen Übertragung von Prüfsignalen (PS) in Prüfzeilen der Vertikalaustastlücke eines Videosignals, das in Komponenten zerlegt, einschließlich der Prüfsignale (PS) abgetastet, in digitale Abtastwerte ($s_i$) umgesetzt und nach einem Differenz-Pulscode-Modulationsverfahren (DPCM) in DPCM-Signalwerte ($\Delta s$) umgesetzt übertragen wird, **dadurch gekennzeichnet,** daß während der Übertragung der Prüfsignale (PS) diese geschlossen abgetastet einem Prüfzeilen-Coder (10) zugeführt werden, der eine Interframe-DPCM-Codierung durchführt, bei der zur Berechnung von zur Codierung benötigten Schätzwerten ($\hat{s}$) lediglich jeweils die einem aktuellen Abtastwert (X) entsprechenden rekonstruierten Abtastwerte ($B_r^{-1}$, $B_r^{-2}$, $B_r^{-13}$, ...) vorangegangener Fernsehbilder verwendet werden und die hiermit berechnete DPCM-codierten Signalwerte ($\Delta s$) der Prüfsignale in die Prüfzeilen des digitalisierten Videosignals wieder eingefügt werden, und daß während der Übertragung des Bildsignals dieses in Komponenten zerlegt mittels eines anderen DPCM-Coders (9) codiert wird.

2. Verfahren nach Anspruch 1 **dadurch gekennzeichnet,** daß die der dem aktuellen Abtastwert (x) entsprechenden rekonstruierten Abtastwerte ($B_r^{-1}$, $B_r^{-2}$, $B_r^{-3}$...) von mehreren vorangegangenen Fernsehbildern zur Ermittlung des Schätzwertes ($\hat{s}$) verwendet werden.

3. Verfahren nach Anspruch 1, **dadurch gekennzeichnet,** daß nur der dem aktuellen Abtastwert (x) entsprechende rekonstruierte Abtastwert ($B_r^{-1}$) des vorangegangenen Fernsehbildes zur Ermittlung des Schätzwertes ($\hat{s}$) verwendet wird.

4. Verfahren nach Anspruch 2 oder 3, **dadurch gekennzeichnet,** daß der Prüfzeilen-Coder (10) nur jeweils während der Prüfzeilen der Fernsehbilder zur Ermittlung der Schätzwerte ($\hat{s}$) eingeschaltet wird.

5. Verfahren nach einem der vorhergehenden Ansprüche, **dadurch gekennzeichnet,** daß die Abtastrate für das Prüfsignal höher als die Abtastrate für das Luminanzsignal ist.

6. Verfahren nach einem der vorhergehenden Ansprüche, **dadurch gekennzeichnet,** daß die Abtastrate für das Prüfsignal der Summe der Abtastraten für das Luminanzsignal (Y) und die Chrominanzsignale (U, V) entspricht.

7. Verfahren nach einem der vorhergehenden Ansprüche, **dadurch gekennzeichnet,** daß zur Übertragung der DPCM-Signalwerte nur wenige Quantisierungsstufen (n=4 bis 8) vorgesehen sind.

8. Verfahren nach einem der vorhergehenden Ansprüche, **dadurch gekennzeichnet,** daß zur Übertragung der DPCM-Signalwerte ($\Delta s$) ein Optimalcode verwendet wird.

9. Verfahren nach einem der vorhergehenden Ansprüche, **dadurch gekennzeichnet,** daß die zu übertragenden codierten DPCM-Signalwerte ($\Delta s$) mit einem fehlererkennenden/fehlerkorrigierenden Code gesichert werden.

10. Verfahren nach Anspruch 9, **dadurch gekennzeichnet,** daß am Ende einer digitalen Übertragungsstrecke die Bitund/oder die Zeichenfehlerrate ermittelt werden.

## Claims

1. Method for digitally transmitting test signals (PS) in test lines of the vertical blanking interval of a video signal which is broken up into components, sampled including the test signals (PS), converted into digital sample values ($s_i$) and transmitted, converted into DPCM signal values ($\Delta s$), according to a differential pulse code modulation technique (DPCM), characterized in that, during the transmission of the test signals (PS), they are fed to a test line coder (10) having been sampled in closed form, said coder carrying out an interframe DPCM coding during which, in order to calculate estimated values ($\hat{S}$) required for coding, in each case only the reconstructed sample values ($B_r^{-1}$, $B_r^{-2}$, $B_r^{-3}$,...), corresponding to a current sample value (X), of preceding television images are used and the DPCM-coded signal values ($\Delta s$), thus calculated, of the test signals are reinserted into the test lines of the digitised video signal, and in that, during the transmission of the picture signal, the latter, having been broken up into components, is encoded by means of another DPCM coder (9).

2. Method according to Claim 1, characterized in that the reconstructed sample values ($B_r^{-1}$, $B_r^{-2}$, $B_r^{-3}$,...), corresponding to the current sample value (X), of a plurality of preceding television images are used to determine the estimated value ($\hat{S}$).

3. Method according to Claim 1, characterized in that only the reconstructed sample value ($B_r^{-1}$), corresponding to the current sample value (X), of the preceding television image is used to determine the estimated value

4. Method according to Claim 2 or 3, characterized in that the test line coder (10) is switched on to determine the estimated values ($\hat{S}$) only during the test lines of the television images in each case.

5. Method according to one of the preceding claims, characterized in that the sampling rate for the test signal is higher than the sampling rate for the luminance signal.

6. Method according to one of the preceding claims, characterized in that the sampling rate for the test signal corresponds to the sum of the sampling rates for the luminance signal (Y) and the chrominance signals (U, V).

7. Method according to one of the preceding claims, characterized in that only a small number of quantisation stages (n=4 to 8) are provided for transmitting the DPCM signal values.

8. Method according to one of the preceding claims, characterized in that an optimum code is used for transmitting the DPCM signal values ($\Delta s$).

9. Method according to one of the preceding claims, characterized in that the coded DPCM signal values ($\Delta s$) to be transmitted are protected with an errordetecting/error-correcting code.

10. Method according to Claim 9, characterized in that the bit and/or the character error rate are determined at the end of a digital transmission path.

## Revendications

1. Procédé pour réaliser la transmission numérique de signaux de test (PS) dans des lignes de test de l'intervalle de suppression verticale d'un signal vidéo, qui est décomposé en composantes, est échantillonné ainsi que les signaux de test (PS), est converti en valeurs numériques d'échantillonnage (si) et est transmis en étant converti en des valeurs de signaux MICD (DS) selon le procédé de modulation différentielle impulsion-code (MICD), caractérisé par le fait que, pendant la transmission des signaux de test (PS), ces derniers sont envoyés, une fois leur échantillonnage terminé, à un codeur de lignes de test (10), qui réalise un codage MICD entre trames, lors duquel pour le calcul de valeurs estimées ($\hat{s}$) nécessaires pour le codage, seules sont utilisées respectivement les valeurs d'échantillonnage reconstituées ($B_r^{-1}, B_r^{-112}, B_r^{-3}$) qui correspondent à une valeur actuelle d'échantillonnage (X), d'images précédentes de télévision et on insère à nouveau les valeurs (Ds), calculées de cette manière et codées selon le codage MICD, des signaux de test dans les lignes de test du signal vidéo numérisé, et que pendant la transmission du signal d'image, ce dernier, qui est décomposé subdivisé en ses composantes, est codé au moyen d'un autre codeur MICD (9).

2. Procédé suivant la revendication 1, caractérisé par le fait qu'on utilise les valeurs d'échantillonnage reconstituées ($B_r^{-1}, B_r^{-2}, B_r{-3}$...), qui correspondent à la valeur actuelle d'échantillonnage (x), de plusieurs images de télévision précédentes pour déterminer la valeur estimée ($\hat{s}$).

3. Procédé suivant la revendication 1, caractérisé par le fait qu'on n'utilise que la valeur d'échantillonnage reconstituée ($B_r^{-1}$), qui correspond à la valeur actuelle d'échantillonnage (x), de l'image de télévision précédente pour déterminer la valeur estimée ($\hat{s}$).

4. Procédé suivant la revendication 2 ou 3, caractérisé par le fait qu'on branche le codeur de lignes de test (10) uniquement pendant les lignes de test des images de télévision, pour déterminer les valeurs estimées ($\hat{s}$).

5. Procédé suivant l'une des revendications précédentes, caractérisé par le fait que la cadence d'échantillonnage pour le signal de test est supérieure à la cadence d'échantillonnage pour le signal de luminescence.

6. Procédé suivant l'une des revendications précédentes, caractérisé par le fait que la cadence d'échantillonnage pour le signal de test correspond à la somme des cadences d'échantillonnage pour le signal de luminance (Y) et pour les signaux de chrominance (U,V).

7. Procédé suivant l'une des revendications précédentes, caractérisé par le fait que pour la transmission des valeurs de signaux MICD, il est prévu seulement quelques étages de quantification (n=4 à 8).

8. Procédé suivant l'une des revendications précédentes, caractérisé par le fait que pour la transmission des valeurs (Ds) des signaux MICD, on utilise un code optimal.

9. Procédé suivant l'une des revendications précédentes, caractérisé par le fait que les valeurs codées des signaux MICD (Ds), qui doivent être transmises, sont protégées par un code identifiant/corrigeant les erreurs.

10. Procédé suivant la revendication 9, caractérisé par le fait que la cadence binaire et/ou le taux d'erreurs sur les signes sont déterminés à la fin d'une voie de transmission numérique.

# FIG 1

FIG 2

FIG 3

FIG 4

$$\Delta s \qquad \Delta s_q \qquad \Delta s_c$$

$$\hat{s}$$

$$\hat{s} = f(s_r)$$

$$s_r, (B_r)$$